# EUROPEAN PATENT APPLICATION

(11) **EP 4 835 016 A1**
(43) Date of publication of application: **04.11.2026**
(21) Application number: 26175063.2
(22) Date of filing: 28.04.2026
(51) Int. Cl.: C09D 11/101, C09D 11/38, C09D 11/328

(54) **ACTIVE ENERGY RAY CURABLE INKJET INK AND INKJET RECORDING METHOD**

(30) Priority: 02.05.2025 JP 2025076880
(71) Applicant: Konica Minolta, Inc., Tokyo 100-7015 (JP)
(72) Inventor: OTA, Masato, Tokyo, 100-7015 (JP); AOYAMA, Ryo, Tokyo, 100-7015 (JP); MIYANO, Masashi, Tokyo, 100-7015 (JP); HATTORI, Takamune, Tokyo, 100-7015 (JP)
(74) Representative: MFG Patentanwälte Meyer-Wildhagen Meggle-Freund Gerhard PartG mbB

(57) **Abstract**

An active energy ray curable inkjet ink contains: a dye having an amino group; acrylic acid; an acrylic acid polymerizable compound (A) shown by the following general formula (1) in which "n" is 1; and an acrylic acid polymerizable compound (B) shown by the general formula (1) in which "n" is 2.

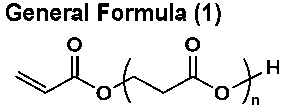

## Description

### BACKGROUND

### TECHNICAL FIELD

The present disclosure relates to an active energy ray curable inkjet ink and an inkjet recording method.

### DESCRIPTION OF RELATED ART

A photolithographic development method and a screen printing method have been conventionally used to form an etching resist, a solder resist, and a marking on a printed circuit board.

On the other hand, in a method of manufacturing a printed circuit board, an inkjet printer is used to draw a conductor circuit pattern on a copper-clad laminate for a printed wiring board. Thus, an etching resist is formed, and an etching process is performed.

In the etching process, the dye may leach out into a chemical solution, such as an etching solution or an alkaline stripping solution. The leached dye may re-deposit on the board, or the etching performance and/or stripping performance of the chemical solution such as an etching solution or an alkaline stripping solution may be degraded, causing a problem in reuse of the chemical solution.

JP 2016-102138A discloses an ink that contains a dye having an anthraquinone skeleton and an amino group, a monomer having a carboxy group, and a photopolymerization initiator. According to this ink, interaction between the amine moiety of the dye and the monomer having the carboxy group can suppress color fading during photocuring.

However, elution of the dye into the chemical solution such as an etching solution or an alkaline stripping solution could not be sufficiently suppressed only by a simple acid-base interaction between an amine moiety of the dye and a monomer containing a carboxyl group.

### SUMMARY OF THE INVENTION

The present disclosure has been made in view of the above-described problems and circumstances. An object of the present disclosure is to provide an active energy ray curable inkjet ink for inkjet printing and an inkjet recording method that can reliably suppress elution of a dye into a chemical solution such as an etching solution or an alkaline stripping solution and that are excellent in etching resistance and strippability with an alkaline stripping solution (alkali strippability).

In order to solve the above-described problems, the present inventors investigated the causes of the problems and found that dye elution into a chemical solution can be reliably suppressed by including a dye having an amino group, acrylic acid, a specific acrylic acid polymerizable compound (A), and a specific acrylic acid polymerizable compound (B). The inventors also found that such an ink has excellent etching resistance and strippability with an alkaline stripping solution.

That is, the above problems can be solved by the following means.

According to the present disclosure, an active energy ray curable inkjet ink contains: a dye having an amino group; acrylic acid; an acrylic acid polymerizable compound (A) shown by a following general formula (1) in which "n" is 1; and an acrylic acid polymerizable compound (B) shown by the general formula (1) in which "n" is 2.

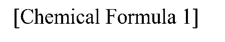

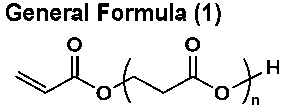

### ADVANTAGEOUS EFFECTS OF THE INVENTION

According to the above-described means of the present disclosure, it is possible to provide an active energy ray curable inkjet ink and an inkjet recording method that can reliably suppress leaching of a dye into a chemical solution such as an etching solution or an alkaline stripping solution and that are excellent in etching resistance and strippability with an alkaline stripping solution.

Although the mechanism by which the effects of the present disclosure are achieved is not clear, it is presumed as follows.

In the active energy ray curable inkjet ink of the present disclosure, acrylic acid, an acrylic acid polymerizable compound (A) in which "n" is 1 in General Formula (1), and an acrylic acid polymerizable compound (B) in which "n" is 2 are used in combination. Accordingly, acrylic acid, the acrylic acid polymerizable compound (A), and the acrylic acid polymerizable compound (B), which have different lengths from a polymerizable moiety to a carboxy group, interact with an amine moiety of the dye. As a result, acrylic acid, the acrylic acid polymerizable compound (A), and the acrylic acid polymerizable compound (B) strongly associate with the dye. Accordingly, leaching of the dye into a chemical solution such as an etching solution or an alkaline stripping solution can be reliably suppressed.

This effect also causes occurrence of multiple ionic interactions centered on the dye in the resist film, thereby improving etching resistance.

Further, during immersion in the alkaline stripping solution, the resist film and a substrate attached to each other are easily detached. Because ionic interactions are generally more flexible than covalent-bond crosslinking using a polyfunctional monomer, the resist film can efficiently swell and be stripped.

As in the mechanism described above, leaching of the dye into an etching solution or an alkaline stripping solution is suppressed by interactions in various aspects. In addition, both etching resistance and strippability with an alkaline stripping solution can be achieved during etching and stripping.

### BRIEF DESCRIPTION OF THE DRAWINGS

The advantages and features provided by one or more embodiments of the invention will become more fully understood from the following detailed description and the appended drawings, which are provided by way of illustration only and are not intended to define the limits of the present invention, wherein:
FIG. 1 is a diagram illustrating a manufacturing process of a printed circuit board when the ink of the present disclosure is used to form an etching resist;
FIG. 2 is a diagram illustrating the manufacturing process of the printed circuit board when the ink of the present disclosure is used to form the etching resist;
FIG. 3 is a diagram illustrating the manufacturing process of the printed circuit board when the ink of the present disclosure is used to form the etching resist;
FIG. 4 is a diagram illustrating the manufacturing process of the printed circuit board when the ink of the present disclosure is used to form the etching resist;
FIG. 5 is a diagram illustrating a manufacturing process of a printed circuit board when the ink of the present disclosure is used to form a plating resist;
FIG. 6 is a diagram illustrating the manufacturing process of the printed circuit board when the ink of the present disclosure is used to form the plating resist;
FIG. 7 is a diagram illustrating the manufacturing process of the printed circuit board when the ink of the present disclosure is used to form the plating resist; and
FIG. 8 is a diagram illustrating the manufacturing process of the printed circuit board when the ink of the present disclosure is used to form the plating resist.

### DETAILED DESCRIPTION

Hereinafter, one or more embodiments of the present invention will be described with reference to the drawings. However, the scope of the invention is not limited to the disclosed embodiments.

The active energy ray curable inkjet ink of the present disclosure contains a dye having an amino group, acrylic acid, an acrylic acid polymerizable compound (A) represented by the following general formula (1) in which "n" is 1, and an acrylic acid polymerizable compound (B) represented by the following general formula (1) in which "n" is 2.

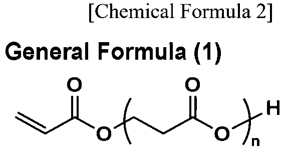

This feature is common to, or corresponds to, each of the embodiments described below.

As one embodiment of the present disclosure, it is preferable that an acrylic acid polymerizable compound (C) in which "n" is 3 in the general formula (1) is contained and that the content of the acrylic acid polymerizable compound (C) is 0.1% by mass or more. Accordingly, the acrylic acid polymerizable compound (C) interacts with an amine moiety of the dye. As a result, elution of the dye into the chemical solution can be further suppressed. It also has excellent etching resistance and alkali strippability.

Further, it is preferable to contain a monomer having an acrylamide group for suppressing dye elution, etching resistance, and alkali strippability.

It is preferable that, as the photopolymerization initiator, a polymerization initiator having an acylphosphine structure is contained for suppressing dye elution and alkali strippability.

From the viewpoints of etching resistance and alkali strippability, it is preferable to contain a polyfunctional monomer in an amount of 30% by mass or less.

It is preferable to contain a polymerizable monomer having an alicyclic structure in terms of etching resistance.

It is preferable that the content of the acrylic acid is 15% by mass or less from the viewpoint of excellent suppression of dye elution, alkali strippability, and decapability.

It is preferable that the viscosity in the range of 40 to 90 °C is in the range of 8 to 15 mPa·s from the viewpoint of excellent inkjet ejection performance.

From the viewpoint of suppressing elusion of the dye and etching resistance, it is preferable that the dye is a salt of a compound having a triarylmethane structure and that the counter anion has a molecular weight of 100 or greater.

From the viewpoint of suppressing dye elution, etching resistance, and alkali strippability, it is preferable that a gelling agent is contained. Further, the gelling agent can fix ink droplets having landed on the recording medium (pinning) and can suppress coalescence of the ink droplets, so that a high-definition image is formed.

The active energy ray curable inkjet ink of the present disclosure is suitably used as an etching resist or a plating resist.

The inkjet recording method of the present disclosure includes ejecting an active energy ray curable inkjet ink onto a substrate and curing the ink with active light rays, wherein the above-described active energy ray curable inkjet ink of the present disclosure is used. Accordingly, elution of the dye into a chemical solution such as an etching solution or an alkaline stripping solution can be reliably suppressed, and etching resistance and alkali strippability can also be improved.

Hereinafter, the present disclosure, components thereof, and embodiments and aspects for carrying out the present disclosure will be described. In the present application, "to" between two numerical values is used to indicate that the numerical values described before and after "to" are included as the lower limit and the upper limit of the range.

### [Active energy ray curable inkjet ink]

The active energy ray curable inkjet ink contains a dye having an amino group, acrylic acid, an acrylic acid polymerizable compound (A) in which n represents 1 in the following general formula (1), and an acrylic acid polymerizable compound (B) in which n represents 2 in the following general formula (1).

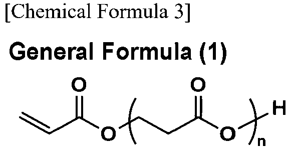

In the present specification, the "active energy ray curable inkjet ink" refers to an inkjet ink that is cured by being irradiated with active energy rays. Hereinafter, the "active energy ray curable inkjet ink" is also simply referred to as "ink".

The term "active energy rays" refers to radiation that physically and chemically acts on a polymerization initiator or a polymerizable compound and promotes crosslinking and polymerization reactions. Specific examples of the active energy rays include visible light, ultraviolet light, X-rays, electron beam, alpha rays, beta rays, and gamma rays.

The term "monofunctional monomer" refers to a compound having one polymerizable functional group. The term "polyfunctional monomer" refers to a compound having two or more polymerizable functional groups.

As used herein, the term "n-functional" refers to having n polymerizable functional groups. Similarly, as used herein, the term "n-functional or more" refers to having n or more polymerizable functional groups. Examples of polymerizable functional groups include an acryloyl group, a methacryloyl group, an allyl group, a vinyl group, and a vinyl ester group.

In addition to the dye, acrylic acid, the acrylic acid polymerizable compound (A), and the acrylic acid polymerizable compound (B), the ink of the present disclosure may further contain, as needed, an acrylic acid polymerizable compound (C) described below, a monomer having an acrylamide group, a photopolymerization initiator, a polyfunctional monomer, a polymerizable monomer having an alicyclic structure, and/or a gelling agent.

The respective components of the ink will be described below.

### <Dye>

The ink contains a dye having an amino group. The ink may contain a pigment in addition to the dye. When the ink contains the dye, the dye-colored ink is cured to form a cured film, thereby making a clear resist pattern.

The dye is not limited to a specific dye. It is preferable to contain at least one dye selected from (i) a dye having a triarylmethane skeleton or an anthraquinone skeleton each having an amino group and (ii) a dye having a phthalocyanine skeleton. These dyes are preferable in that they are highly effective in suppressing elution of the dye from an ink-cured film.

In particular, the dye is preferably a salt of a compound having a triarylmethane structure. It is further preferrable that the counter anion of the salt of the compound having the triarylmethane structure has a molecular weight of 100 or greater, from the viewpoints of suppressing dye elution from the ink cured film and etching resistance.

Examples of compounds having a triarylmethane structure include triphenylmethane, Crystal Violet, Solvent Violet 8, Basic Violet 1, Solvent Blue 5, and Basic Blue 7.

The structural formula of Solvent Blue 5 is shown below.

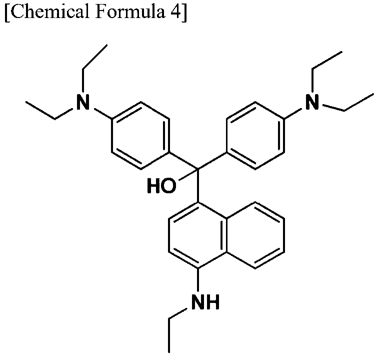

The structural formula of Basic Blue 7 is shown below.

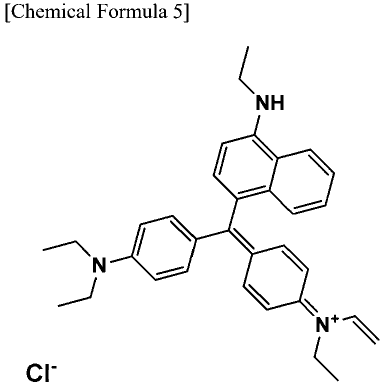

Examples of the counter anion having a molecular weight of 100 or more include a hexafluorophosphate ion, a trifluoromethanesulfonate ion, a bis(trifluoromethyl sulfonyl)imide ion, a tetraphenylborate ion, Acid Yellow 36, and Acid Yellow 42.

Examples of the dye that are salts of compounds having a triarylmethane structure include, for example, VALIFAST Violet 1701 (manufactured by Orient Chemical Industries Co., Ltd.) and VALIFAST Violet 1704 (manufactured by Orient Chemical Industries Co., Ltd.).

VALIFAST Violet 1701 is a salt including Solvent Violet 8 as a triarylmethane structure and Acid Yellow 42 as a counter anion.

Examples of the dye having an anthraquinone skeleton and an amino group include Solvent Red 122 and Solvent Blue 35.

The structural formula of Solvent Red 122 is shown below.

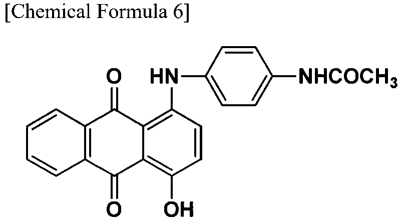

The structural formula of Solvent Blue 35 is shown below.

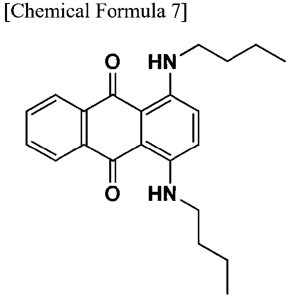

Examples of the dye having a phthalocyanine skeleton include Direct Blue 87.

The structural formula of Direct Blue 87 is shown below.

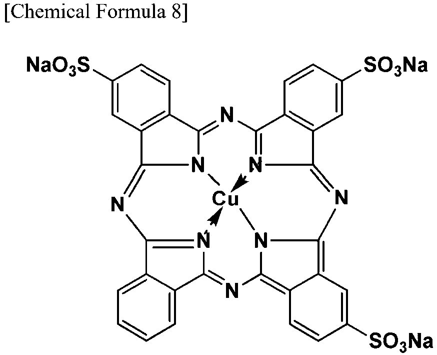

The content of the dye is preferably in a range of 0.01 to 3% by mass with respect to the total ink amount, more preferably in a range of 0.03 to 2% by mass, and still more preferably in a range of 0.05 to 1.5% by mass. When the content of the dye is within this range, a well-colored cured film can be obtained, and etching resistance is improved.

The dye may be any dye having an amino group, other than: (i) a dye having an anthraquinone skeleton and an amino group, (ii) a dye having a naphthalene skeleton and an amino group, (iii) a dye having a triarylmethane structure, and (iv) a dye having a phthalocyanine skeleton.

### <Acrylic Acid>

Acrylic acid is a compound wherein "n" represents 0 in General Formula (1). Examples of commercially available products of acrylic acid include, for example, 98% acrylic acid (manufactured by Toagosei Co., Ltd.), acrylic acid (manufactured by Tokyo Chemical Industry Co., Ltd.), and acrylic acid (manufactured by FUJIFILM Wako Pure Chemical Corporation).

The content of acrylic acid is preferably 15% by mass or less, and more preferably in a range of 3 to 10% by mass, relative to the total mass of the ink.

### <Acrylic acid polymerizable compound (A)>

The acrylic acid polymerizable compound (A) is a compound in which n represents 1 in General Formula (1). Examples of commercially available products of the acrylic acid polymerizable compound (A) include, for example, 2-Carboxyethyl acrylate (manufactured by Sigma-Aldrich).

The content of the acrylic acid polymerizable compound (A) is preferably in a range of 0.5 to 15% by mass, and more preferably in a range of 3 to 10% by mass, relative to the total mass of the ink, from the viewpoint of suppressing dye elution.

### <Acrylic acid polymerizable compound (B)>

The acrylic acid polymerizable compound (B) is a compound in which n represents 2 in General Formula (1).

The content of the acrylic acid polymerizable compound (B) is preferably in the range of 0.1 to 10% by mass, and more preferably in the range of 1 to 5% by mass, relative to the total mass of the ink, from the viewpoint of suppressing dye elution.

The mass ratio (acrylic acid polymerizable compound (A)/acrylic acid polymerizable compound (B)) of the content (% by mass) of the acrylic acid polymerizable compound (A) with respect to the total mass of the ink to the content (% by mass) of the acrylic acid polymerizable compound (B) with respect to the total mass of the ink is preferably in the range of 1 to 5 from the viewpoint of suppressing dye elution.

### <Acrylic acid polymerizable compound (C)>

The acrylic acid polymerizable compound (C) is a compound in which n represents 3 in General Formula (1).

Although the acrylic acid polymerizable compound (C) need not be contained, it is preferable that the ink contains the acrylic acid polymerizable compound (C) in an amount of 0.1% by mass or greater, more preferably in an amount in the range of 0.5 to 1% by mass with respect to the total mass of the ink.

The acrylic acid polymerizable compounds (B) and (C) can be prepared, for example, by isolating the compounds from a reaction product (D) obtained by the reaction described below by high-performance liquid chromatography (HPLC).

In a three-necked reactor equipped with a temperature probe and a reflux condenser, 100 g of 98% acrylic acid (manufactured by Toagosei Co., Ltd.), 20% Amberlyst A15 resin, and 1000 ppm of hydroquinone methyl ether as a polymerization inhibitor were added. Then, the reaction medium was stirred at 125 °C while air bubbling to obtain the reaction product (D).

The HPLC conditions are described in the Examples below.

The acrylic acid polymerizable compound (B) is obtained by collecting the peak at the elution time of about 13.5 minutes, and the acrylic acid polymerizable compound (C) is obtained by collecting the peak at the elution time of about 15 minutes.

### <Monomer having an acrylamide group>

Examples of the monomer having an acrylamide group include N, N-dimethylacrylamide, N-hydroxyethylacrylamide, acryloylmorpholine, N, N-diethylacrylamide, N-isopropylacrylamide, and diacetone acrylamide.

Examples of commercially available monomers having an acrylamide group include, for example, DMAA, HEAA, ACMO, DEAA, NIPAM, and DAAM manufactured by KJ Chemicals Corporation.

The ink may not contain a monomer having an acrylamide group. The content of the monomer having an acrylamide group is preferably from 0 to 60% by mass, and more preferably from 10 to 30% by mass, based on the total mass of the ink.

### <Alicyclic monomer>

A polymerizable monomer having an alicyclic structure is also referred to as an alicyclic monomer. The alicyclic monomer may be a monofunctional monomer (an alicyclic monofunctional monomer) or a polyfunctional monomer having an alicyclic structure (an alicyclic polyfunctional monomer). The ink of the present disclosure preferably contains an alicyclic monofunctional monomer. Also, the alicyclic monofunctional monomer preferably has a molecular weight in the range of 200 to 300. Further, the alicyclic monomer is preferably an alicyclic (meth)acrylate monomer. In the present specification, the term "(meth)acrylate" is a generic term for "acrylate" and "methacrylate" and means one or both thereof.

The alicyclic monofunctional monomer preferably has a molecular weight in a range of 200 to 300. Further, the alicyclic monofunctional monomer is preferably an alicyclic (meth)acrylate monomer. In the present specification, the term "(meth)acrylate" is a generic term for "acrylate" and "methacrylate" and means one or both thereof.

Examples of the alicyclic monofunctional monomer include isobornyl acrylate, 3,5,5-trimethylcyclohexyl acrylate, 4-tert-butylcyclohexyl acrylate, dicyclopentenyloxyethyl acrylate, dicyclopentenyl acrylate, and dicyclopentanyl acrylate.

Examples of commercially available products of the alicyclic monofunctional monomer include Miramer M1130 (manufactured by Miwon) (Tg: 43 °C), Miramer M1140 (manufactured by Miwon) (Tg: 77 °C), Miramer M1150 (manufactured by Miwon) (Tg: 65 °C), FA-511AS (manufactured by Resonac) (Tg: 120 °C), FA-513AS (manufactured by Resonac) (Tg: 120 °C), and FA-512AS (manufactured by Resonac) (Tg: 20 °C).

The content of the alicyclic monofunctional monomer is preferably in a range of 10 to 60% by mass based on the total ink.

### <Polyfunctional Monomer>

The polyfunctional monomer may be any monomer having two or more functional groups in the molecule. The polyfunctional monomer is preferably a difunctional or trifunctional or higher-functional (meth)acrylate monomer. The polyfunctional monomer is more preferably a polyfunctional monomer having a cyclic structure.

Examples of the bifunctional (meth)acrylate monomer include triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, dioxane glycol diacrylate, bisphenol A propylene oxide (PO) adduct di(meth)acrylate, hydroxypivalic acid neopentyl glycol di(meth)acrylate, and polytetramethylene glycol di(meth)acrylate.

Examples of tri- or higher-functional (meth)acrylate monomers include trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerol propoxy tri(meth)acrylate, and pentaerythritol ethoxy tetra(meth)acrylate.

The (meth)acrylate monomer may be a modified product thereof. Examples of the modified product include ethylene oxide-modified (meth)acrylate compounds, such as ethylene oxide-modified trimethylolpropane tri(meth)acrylate and ethylene oxide-modified pentaerythritol tetraacrylate. Examples of the modified product include caprolactone-modified (meth)acrylate compounds, such as caprolactone-modified trimethylolpropane tri(meth)acrylate. Examples of the modified product further include caprolactam-modified (meth)acrylate compounds, such as caprolactam-modified dipentaerythritol hexa(meth)acrylate.

These may be used alone or in combination of two or more thereof.

Examples of commercially available polyfunctional monomers include M222 (a bifunctional acrylate monomer having a propylene oxide skeleton; manufactured by Miwon), M210 (a bifunctional acrylate monomer, neopentyl glycol hydroxypivalate diacrylate; manufactured by Miwon), A-DOG (dioxane glycol diacrylate; manufactured by Shin-Nakamura Chemical Co., Ltd.; molecular weight: 326), A-DCP (tricyclodecane dimethanol diacrylate; manufactured by Shin-Nakamura Chemical Co., Ltd.; molecular weight: 304), SR444 (a trifunctional acrylate monomer; manufactured by Alkema), M262 (tricyclodecane dimethanol diacrylate; manufactured by Miwon), and CD406 (cyclohexane dimethanol diacrylate; manufactured by Alkema). Among the commercially available products, A-DCP, M262, CD406, and A-DOG, which are polyfunctional monomers having a cyclic structure, are preferred.

The ink may not contain the polyfunctional monomer. It is preferable that the content of the polyfunctional monomer is 0 to 30% by mass, and more preferably 5 to 20% by mass, based on the total mass of the ink, from the viewpoint of high-temperature copper etching resistance and hardness of the coating film.

A bifunctional monomer having a cyclic structure is preferred because the coating film becomes tough and etching resistance is improved.

### <Aromatic Monomer>

An aromatic monomer is a monomer having an aromatic ring. The aromatic monomer is preferably a monomer having a molecular weight within a range of 200 to 300.

Examples of the aromatic monomer include 2-phenoxyethyl (meth)acrylate, bisphenol A-type diacrylate, o-phenylphenoxyethyl (meth)acrylate, and m-phenoxybenzyl (meth)acrylate. Examples of the aromatic monomer include ethoxylated phenoxy (meth)acrylate, alkoxylated phenol (meth)acrylate, and 2-hydroxy-o-phenylphenol propyl (meth)acrylate.

Examples of commercially available aromatic monomers include Miramer M1182 (Miwon), Miramer M142 (Miwon), Miramer M1142 (Miwon), SR339NS (Sartomer), and V#192HP (Osaka Organic Chemical Industry Co., Ltd.).

The content of the aromatic monomer is preferably in the range of 0 to 40% by mass based on the total ink.

### <Other Monomers>

The ink of the present disclosure may contain one or more other monomers in addition to the above-described monomer.

Preferable examples of the other monomers include cyclic imide acrylate, caprolactone (meth)acrylate, cyclic trimethylolpropane formal (meth)acrylate, isooctyl (meth)acrylate, lauryl (meth)acrylate, isodecyl (meth)acrylate, tetrahydrofurfuryl acrylate, (meth)acrylates such as stearyl (meth)acrylate, and methoxypolyethylene glycol (meth)acrylate. In particular, from the viewpoint of reducing curing shrinkage, a monomer having an ethylene glycol moiety is particularly preferable. In addition, from the viewpoint of etching resistance, a monomer having a cyclic imide structural unit is preferably used.

Examples of commercially available products of the other monomers include Aronix M-140 (Toagosei Co., Ltd.), Miramer M1088 (Miwon), Miramer M1110 (Miwon), Miramer M150 (Miwon), and SR551 (Sartomer). In particular, a compound having an ethylene oxide moiety is preferred.

### <Polymerization Initiator>

The polymerization initiator is preferably a radical polymerization initiator. Examples of the radical polymerization initiator and include intramolecular cleavage-type photopolymerization initiator and a hydrogen abstraction-type polymerization initiator. In the present disclosure, it is particularly preferable to use a photopolymerization initiator.

The ink may contain only one kind of photopolymerization initiator or may contain two or more kinds of photopolymerization initiators in combination.

Examples of the intramolecular cleavage-type photopolymerization initiator include acetophenone-based initiators such as 2-hydroxy-2-methyl-1-phenylpropan-1-one, benzyl dimethyl ketal, 4-(2-hydroxyethoxy)phenyl-(2-hydroxy-2-propyl)ketone, 1-hydroxycyclohexyl phenyl ketone, 2-methyl-2-morpholino(4-methylthiophenyl)propan-1-one, and 2-benzyl-2-dimethylamino-1-(4-morpholinophenyl)butanone; benzoin-based initiators such as benzoin, benzoin methyl ether, and benzoin isopropyl ether; and acylphosphine oxide-based initiators such as 2,4,6-trimethylbenzoin diphenylphosphine oxide and bis(2,4,6-trimethylbenzoin)phenylphosphine oxide.

Among these, it is particularly preferable to use an acylphosphine oxide-based initiator having an acylphosphine structure.

Examples of commercially available products of intramolecular cleavage-type photopolymerization initiators include Omnirad 127, Omnirad 184, Omnirad 651, Omnirad 2959, Omnirad 819, Omnirad 907, Esacure One (manufactured by IGM Resins) and SPEEDCURE 73 (manufactured by Sartomer).

Examples of hydrogen-abstracting photopolymerization initiators include benzophenone-based initiators such as benzophenone, methyl o-benzoylbenzoate, 4-phenylbenzophenone, 4,4'-dichlorobenzophenone, hydroxybenzophenone, 4-benzoyl-4'-methyl-diphenyl sulfide, acrylated benzophenone, 3,3',4,4'-tetra(t-butylperoxycarbonyl)benzophenone, and 3,3'-dimethyl-4-methoxybenzophenone; and thioxanthone-based initiators such as 2-isopropylthioxanthone, 2,4-dimethylthioxanthone, 2,4-diethylthioxanthone, and 2,4-dichlorothioxanthone.

Examples of commercially available hydrogen-abstracting photopolymerization initiators include SpeedCure 2-ITX, SpeedCure 7010, and SpeedCure BP.

The content of the polymerization initiator is preferably in a range of 1 to 10% by mass and more preferably in a range of 1.5 to 8% by mass with respect to the total ink.

### <Gelling agent>

The gelling agent can gel the ink droplets having landed on the oxide film into a gel state to temporarily fix the ink droplets (pinning). When the ink is pinned in the gel state, wetting and spreading of the ink are suppressed and adjacent dots are less likely to coalesce, so that a higher-resolution image is formed. The ink of the present disclosure may contain only one kind of gelling agent or may contain two or more kinds of gelling agents.

Examples of gelling agents include dialkyl ketones, fatty acid esters, fatty acid amides, and oil gelling agents. It is preferable that the gelling agent used in the present disclosure has no acidic group, such as -OH or - COOH, at a terminal of an alkyl chain. The gelling agent having no acidic group is not limited to a 100% pure gelling agent that consists of only components having no acidic group. The gelling agent having no acidic group includes a gelling agent having an acidic group as an impurity within the range of not inhibiting the objects and effects of the present invention. The acid value of the gelling agent should be 10 mg KOH/g or less.

A particularly preferred gelling agent includes at least one of the compounds having structures represented by the following general formulae (G1) and (G2).

General formula (G1): R₁-CO-R₂

General formula (G2): R₃-COO-R₄

[In the formulae, R₁ to R₄ each independently represents an alkyl chain having a linear portion with 12 or more carbon atoms, and optionally having a branch.]

In the ketone wax represented by General Formula (G1) or the ester wax represented by General Formula (G2), the linear or branched hydrocarbon group (alkyl chain) has 12 or more carbon atoms. Therefore, the crystallinity of the gelling agent is further increased, and a larger space is formed in the card house structure described below. As a result, an ink vehicle, such as a solvent or a photopolymerizable compound, is likely to be sufficiently retained in the space, and the pinning property of the ink is further improved.

The number of carbon atoms of the linear or branched hydrocarbon group (alkyl chain) is preferably 26 or less. When the number of carbon atoms is 26 or less, the melting point of the gelling agent does not become excessively high, and the ink does not need to be excessively heated when ejected.

From the above viewpoint, it is particularly preferable that R₁ and R₂, or R₃ and R₄, each be a straight-chain hydrocarbon group having 12 to 23 carbon atoms.

Further, from the viewpoint of increasing the gelation temperature of the ink and quickly gelling the ink after landing, it is preferable that any of R₁ or R₂, or any of R₃ or R₄, is a saturated hydrocarbon group the number of carbon atoms of which is 12 or greater and 23 or less.

From the above viewpoint, it is more preferable that both R₁ and R₂, or both R₃ and R₄, are a saturated hydrocarbon group the number of carbon atoms of which is 11 or greater and less than 23.

Examples of ketone waxes represented by the above general formula (G1) include dilignoceryl ketone (C24-C24), dibehenyl ketone (C22-C22), distearyl ketone (C18-C18), dieicosyl ketone (C20-C20), dipalmityl ketone (C16-C16), dimyristyl ketone (C14-C14), dilauryl ketone (C12-C12), lauryl myristyl ketone (C12-C14), lauryl palmityl ketone (C12-C16), myristyl palmityl ketone (C14-C16), myristyl stearyl ketone (C14-C18), myristyl behenyl ketone (C14-C22), palmityl stearyl ketone (C16-C18), palmityl behenyl ketone (C16-C22), and stearyl behenyl ketone (C18-C22). The carbon numbers in the parentheses above represent the numbers of carbon atoms of the respective two hydrocarbon groups separated by a carbonyl group.

Examples of commercially available ketone waxes represented by general formula (G1) include Stearonne (manufactured by Alfa Aesar; Stearon) and 18-Pentatriacontanone (manufactured by Alfa Aesar). Examples of commercially available ketone waxes further include Hentriacontan-16-one (manufactured by Alfa Aesar) and KAO WAX T-1 (Kao Corporation).

Examples of the fatty acids or ester wax represented by the general formula (G2) include behenyl behenate (C21-C22), eicosyl eicosanoate (C19-C20), stearyl stearate (C17-C18), palmityl stearate (C17-C16), lauryl stearate (C17-C12), cetyl palmitate (C15-C16), stearyl palmitate (C15-C18), myristyl myristate (C13-C14), cetyl myristate (C13-C16), octyldodecyl myristate (C13-C20), stearyl oleate (C17-C18), stearyl erucate (C21-C18), stearyl linoleate (C17-C18), behenyl oleate (C18-C22), and arachidyl linoleate (C17-C20). The carbon numbers in the parentheses above represent the number of carbon atoms of the respective two hydrocarbon groups separated by an ester group.

Commercially available products of the ester wax represented by the general formula (G2) include UNISTER M-2222SL and Sperm Aceti, manufactured by NOF Corporation ("UNISTER" is a registered trademark of the company) and EXCEPARL SS and EXCEPARL MY-M. The commercially available products of the ester wax include products manufactured by Kao Corporation ("EXCEPARL" is a registered trademark of the company), EMALEX CC-18, and EMALEX CC-10. Examples of the commercially available ester wax include products manufactured by Nihon Emulsion Co., Ltd. ("EMALEX" is a registered trademark of the company) and AMREPS PC manufactured by Kokyu Alcohol Kogyo Co., Ltd. ("AMREPS" is a registered trademark of the company).

Since these commercially available products are often mixtures of two or more components, separation or purification may be performed as necessary before incorporating the products into the ink. Among these gelling agents, ketone waxes, ester waxes, higher fatty acids, higher alcohols, and fatty acid amides are preferable from the viewpoint of further enhancing the pinning property.

The content of the gelling agent is preferably in a range of 0.5 to 5.0% by mass based on a total mass of the ink. When the content of the gelling agent is within the above range, the ink shows excellent etching resistance and plating resistance, and the solubility of the gelling agent in a solvent component and the pinning property are favorable. Further, from the above viewpoint, the content of the gelling agent in the inkjet ink is more preferably in a range of 0.5 to 2.5% by mass.

Further, from the following viewpoint, the gelling agent is preferably crystallized in the ink at a temperature equal to or lower than the gelation temperature of the ink. The gelation temperature refers to a temperature at which, when the ink in the sol or liquid state by heating is cooled, the gelling agent undergoes a phase transition from a sol to a gel and causes an abrupt change in the ink viscosity. Specifically, the ink in the sol state or the liquid state is cooled while its viscosity is measured with a viscoelasticity measuring apparatus (e.g., MCR300 manufactured by Physica), and the temperature at which the viscosity increases rapidly can be determined as the gelation temperature of the ink.

When the gelling agent crystallizes in plate shapes in the ink, the gelling agent forms a three-dimensional structure that houses the ink vehicle, such as a solvent and a photopolymerizable compound. Such a structure is hereinafter referred to as a "card house structure".

When the card house structure is formed, the liquid ink vehicle is retained in the space, so that the ink droplets are less likely to wet and spread. Thus, the pinning property of the ink is further enhanced. When the pinning property of the ink is enhanced, ink droplets having landed on the recording medium are less likely to coalesce with each other, so that a higher-definition image is formed.

To form the card house structure, it is preferable that the ink vehicle, such as a solvent and a photopolymerizable compound, is compatible with the gelling agent. On the other hand, when the ink vehicle, such as a solvent and a photopolymerizable compound, is phase-separated from a gelling agent in the ink, the card house structure may not be formed.

### <Other Components>

The ink of the present disclosure may further contain other components, including a polymerization inhibitor and a surfactant, within the range of not inhibiting the effects of the present disclosure. The ink of the present disclosure may contain only one of these components or may contain two or more of these components.

### (Polymerization Inhibitor)

Examples of polymerization inhibitors include (alkyl)phenols, hydroquinone, catechol, resorcinol, p-methoxyphenol, t-butylcatechol, t-butylhydroquinone, pyrogallol, 1,1-diphenyl-2-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oxime cresol, guaiacol, o-isopropylphenol, butyraldoxime, methyl ethyl ketoxime, and cyclohexanone oxime.

Examples of commercially available polymerization inhibitors include Irgastab UV-10 (manufactured by Basf SE) and Genorad 18 (manufactured by Rahn A.G.).

The amount of the polymerization inhibitor can be determined as appropriate within a range in which the effects of the present disclosure can be obtained. The amount of the polymerization inhibitor can be, for example, 0.001% by mass or greater and less than 1.0% by mass with respect to the total amount of the ink.

### (Surfactant)

Examples of the surfactant include anionic surfactants such as dialkyl sulfosuccinates, alkyl naphthalene sulfonates, and fatty acid salts; nonionic surfactants such as polyoxyethylene alkyl ethers, polyoxyethylene alkyl aryl ethers, acetylene glycols, and polyoxyethylene-polyoxypropylene block copolymers; cationic surfactants such as alkylamine salts and quaternary ammonium salts; acryl-modified surfactants; and silicone-based and fluorine-based surfactants.

Specific examples of silicone-based surfactants include polyether-modified polysiloxane compounds, specifically, Tego Rad 2250 manufactured by Evonik Industries AG; KF-351A, KF-352A, KF-642, and X-22-4272 manufactured by Shin-Etsu Chemical Co., Ltd.; BYK307, BYK345, BYK347, and BYK348 manufactured by BYK-Chemie GmbH ("BYK" is a registered trademark of the company); and TSF4452 manufactured by Momentive Performance Materials Inc.

A fluorine-based surfactant means a surfactant in which part or all of hydrogen atoms bonded to carbon atoms of a hydrophobic group in an ordinary surfactant are substituted with fluorine atoms.

Examples of fluorine-based surfactants include Megafac F manufactured by DIC Corporation (Megafac is a registered trademark of the company); Surflon manufactured by AGC Seimi Chemical Co., Ltd. (Surflon is a registered trademark of the company); Fluorad FC manufactured by 3M Company (Fluorad is a registered trademark of the company); Monflor manufactured by Imperial Chemical Industries; Zonyls manufactured by E. I. du Pont de Nemours and Company; Licowet VPF manufactured by Rube Werke Hoechst; and FTERGENT manufactured by Neos Company (FTERGENT is a registered trademark of the company).

Examples of acryl-modified surfactants include BYK-3500, BYK-3530, and BYK-3560 (available from BYK-Chemie GmbH), and lauryl acrylate. An acrylic-modified surfactant is preferably used because it allows the surface tension of the ink to be adjusted moderately.

The amount of the surfactant may be appropriately determined within a range in which the effects of the present disclosure can be obtained. The amount of the surfactant may be, for example, 0.001% by mass or greater and less than 1.0% by mass with respect to the total amount of the ink.

### <Physical Properties>

When the ink of the present disclosure contains a gelling agent, the ink preferably has a phase transition point in a range of 40 °C or higher and lower than 100 °C. When the phase transition point is 40 °C or higher, the ink rapidly gels after landing on a recording medium, thereby further improving the pinning property. Further, when the phase transition point is less than 100 °C, ink handleability is improved and ejection stability is enhanced.

From the viewpoint of allowing ink ejection at a lower temperature and reducing a load on the image forming apparatus, the phase transition point of the ink of the present disclosure is more preferably in a range of 40 °C to 60 °C.

The viscosity of the ink of the present disclosure in the range of 40 °C to 90 °C and the phase transition point thereof can be obtained by measuring temperature-dependent dynamic viscoelasticity of the ink using a rheometer.

The viscosity of the ink in the range of 40 °C to 90 °C is preferably in the range of 8 mPa·s to 15 mPa·s. In the present disclosure, the values of viscosity and phase transition point are obtained by the following method.

The ink is heated to 100 °C and then cooled to 20 °C at a cooling rate of 0.1 °C/s and a shear rate of 11.7 (1/s) while measuring viscosity using a Physica MCR301 (Anton Paar) at a shear rate of 1000 (1/s). Thus, a viscosity-temperature curve is obtained.

The viscosity in the range of 40 °C to 90 °C can be determined by reading, from the viscosity-temperature curve, the viscosity values at the respective temperatures in the range of 40 °C to 90 °C. The phase transition point can be determined as the temperature at which the viscosity reaches 200 mPa·s on the viscosity-temperature curve.

In the ink of the present disclosure, it is preferable that the water content measured by the Karl Fischer method is 0.02% or greater by mass and less than 1.50% by mass, and more preferably 0.05% or greater and 1.00% or less by mass, based on the total mass of the ink.

When the water content is less than 1.50% by mass, it is possible to suppress the tendency of water to react with the acrylic acid polymerizable compound, thereby improving ink storage stability and etching resistance.

When the water content is 0.02% or greater by mass, water-induced swelling of a coating film is increased, so that peelability with a solvent-containing aqueous stripping solution is enhanced.

The water content can be measured by a known method, such as the Karl Fischer method.

In the Karl Fischer method for measuring water, the amount of water in a substance is quantified by utilizing the fact that the Karl Fischer reagent containing iodine, sulfur dioxide, and pyridine specifically reacts with water in the presence of methanol. In particular, in the volumetric titration method, a titration solvent is put in a titration flask, a sample is dissolved in the titration solvent to extract moisture in the sample, and the solution is thereafter titrated with the Karl Fischer reagent containing iodine, sulfur dioxide, and a base as main components to determine the moisture content.

Water reacts with iodine and sulfur dioxide in the presence of a base and an alcohol.

H₂O + I₂ + SO₂ + CH₃OH + 3RN → 2RN·HI + RN-HSO₄CH₃

Since H₂O and I₂ react at a ratio of 1: 1 according to the above equation, the number of milligrams of water (titer) per 1 mL of the Karl Fischer reagent is determined in advance using water or a water standard substance. Then, the water content (mg) is calculated from the titration volume (mL) of the Karl Fischer reagent used to measure the sample. $Water content \left(mg\right) = Karl Fischer reagent titration volume \left(mL\right) \times titer \left(mg {H}_{2}O/mL\right)$

The Karl Fischer reagent is also referred to as a KF reagent.

Then, the water content ratio with respect to the total mass of the ink is calculated from the calculated water content. $Water content ratio \left(%\right) = \left(water content in ink/total mass of ink\right) \times 100$

Examples of means for setting the water content to 0.02% by mass or greater and less than 1.50% by mass include: leaving the ink to stand in an open system in a constant-temperature constant-humidity apparatus; directly adding water; and storing the ink with the addition of a moisture absorbent such as molecular sieves or silica. By stirring the ink while leaving the ink to stand, moisture absorption and dehumidification can be promoted.

Examples of materials for a container (packaging material) that stores ink adjusted to have a desired water content include PET, polyvinyl chloride, an ethylene-vinyl alcohol copolymer, a metal member such as aluminum, nylon, linear low-density polyethylene (LLDPE), low-density polyethylene (LDPE), high-density polyethylene (HDPE), and polypropylene (PP). The material of the container is more preferably a metal member such as aluminum, LLDPE (linear low-density polyethylene), LDPE (low-density polyethylene), HDPE (high-density polyethylene), or PP (polypropylene).

The thickness of the container is preferably 0.1 to 3 mm from the viewpoint of moisture permeability and gas barrier properties (e.g., against oxygen). Further, the container is preferably colored to block ultraviolet light and visible light.

Further, from the viewpoint of maintaining the water content, it is preferable to use a moisture-proof bag. Examples of materials for the moisture-proof bag include PET, metal members such as aluminum, nylon, LLDPE, LDPE, HDPE, and polypropylene (PP). As the structure of the moisture-proof bag, a laminated moisture-proof bag having multiple layers attached to each other is preferable, such as a three-layer laminate including nylon, aluminum foil, and LLDPE, for example. From the viewpoint of the water vapor transmission rate and gas barrier properties against gases such as oxygen, it is more preferable that the moisture-proof bag includes a layer composed of at least one of a metal and a metal compound. The moisture-proof bag preferably has a thickness of 0.05 to 0.3 mm.

At least either the container or the moisture-proof bag preferably has a water vapor transmission rate of 30 g/m²·24 hrs or less. The water vapor transmission rate is more preferably 15 g/m²·24 hrs or less, still more preferably 10 g/m²·24 hrs or less, and particularly preferably 5.0 g/m²·24 hrs or less. A film having the water vapor transmission rate within the above range can suppress an increase in the water content of the composition filled in the pack when the pack is stored for a long time. The water vapor transmission rate is a value measured at 40 °C and a relative humidity of 90%.

From the viewpoint of etching resistance, the dissolved oxygen content in the ink of the present disclosure is preferably 0.1 mg/L or greater and less than 10.0 mg/L at 25 °C. When the dissolved oxygen content is 0.1 mg/L or greater, etching resistance can be obtained without accelerating deterioration of the stored ink. When the dissolved oxygen content is less than 10.0 mg/L, etching resistance and high-temperature copper etching resistance can be obtained without a decrease in curability.

It is preferable that the ink having the dissolved oxygen content of 0.1 mg/L or greater and less than 10.0 mg/L at 25 °C is filled in an ink pack, an inkjet recording apparatus, or an inkjet head.

The dissolved oxygen content can be measured using an organic-solvent-compatible optical handheld DO meter (manufactured by Hamilton Company), using ODO CAP H2 as a fluorescent-membrane replacement cap.

The ink of the present disclosure may contain, within the range of not decreasing etching resistance, one or more metal elements selected from the group consisting of: alkali metals such as Li, Na, and K; alkaline earth metals such as Mg, Ca, and Ba; transition metals such as Mn, Zn, Fe, and Sn; and metalloids such as Si. By including the above metal(s), it is possible to reduce costs by reducing the number of purification steps for a colorant such as a dye and for a material and to improve storage stability of the ink, for example.

The surface tension of the ink of the present disclosure is preferably 60 mN/m or less, more preferably 20 to 50 mN/m, and still more preferably 25 to 45 mN/m. The surface tension is measured at 25 °C using a surface tensiometer. For example, the surface tension is measured by a plate method using an automatic surface tensiometer (product name "DY-300") manufactured by Kyowa Interface Science Co., Ltd.

### <Use>

The ink of the present disclosure can be used, for example, to form an insulating film, a protective film, an etching resist, and a plating resist in various fields such as metal processing, electronic circuits, printed circuit boards, plate-making, nameplates, semiconductor applications, and color filters. In particular, the ink of the present disclosure is preferably used as an etching resist or a plating resist. The ink of the present disclosure is particularly preferably used as an etching resist because the ink has good strippability with respect to an alkaline stripping solution.

To use the ink for forming an etching resist, a cured film formed by the ink should be removable with an alkaline stripping solution or the like. To use the ink for forming a plating resist, a cured film formed by the ink may be removed with a stripping solution containing an organic solvent.

### [Inkjet recording method]

The inkjet recording method includes ejecting an active energy ray curable inkjet ink onto a substrate and curing the ink by irradiating the ink with active energy rays, wherein the above-described ink of the present disclosure is used as the active energy ray curable inkjet ink.

It is preferable that the substrate has a metal film (oxide film) or does not have a metal film. In the following description, the substrate has an oxide film on its top surface as an example.

Specifically, the inkjet recording method preferably includes (1) ejecting the ink from a nozzle of an inkjet head so that the ink lands on an oxide film on a substrate and (2) irradiating the ink having landed on the oxide film with active energy rays to cure the ink.

Hereinafter, a method of manufacturing a printed circuit board by using the ink of the present disclosure for forming an etching resist will be described as an example.

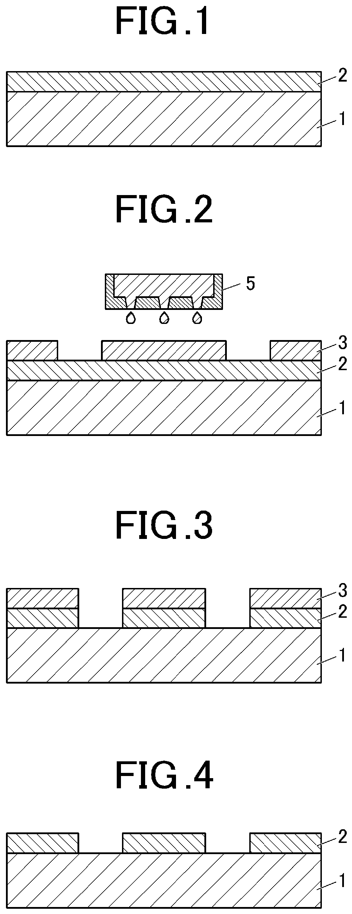

FIG. 1 to FIG. 4 are diagrams illustrating the manufacturing process of the printed circuit board when the ink of the present disclosure is used to form the etching resist.

### <Step (1)>

In FIG. 1, a conductive oxide film 2 is formed on a substrate 1 serving as a recording medium. Ink droplets are ejected from an inkjet head 5 onto the oxide film 2 of FIG. 1 to land at positions corresponding to an etching resist film 3 to be formed. Thus, patterning is performed (see FIG. 2).

The ejection method of the inkjet head may be either an on-demand method or a continuous method.

The on-demand inkjet head may be any one of an electromechanical conversion type, such as a single-cavity type, a double-cavity type, a bender type, a piston type, a shear-mode type, and a shared-wall type, and an electrothermal conversion type, such as a thermal inkjet type and a Bubble Jet (registered trademark) type. Bubble Jet is a registered trademark of Canon Inc.

The adhesive, which is a liquid-contacting member used in the inkjet head, is not particularly limited and may be a room-temperature-curable adhesive cured at room temperature, a thermosetting adhesive cured by promoting polymerization by heating, or an actinic-radiation-curable adhesive cured by promoting polymerization by irradiation with active energy rays such as ultraviolet light. Among these, a thermosetting adhesive is preferable, and, for example, an epoxy-based adhesive is preferably used.

By ejecting heated ink droplets from an inkjet head, ejection stability can be improved. The ink temperature at ejection is preferably within a range of 25 to 100 °C, and more preferably within a range of 30 to 90 °C, to further improve ejection stability. In particular, it is preferable that ejection is performed at an ink temperature at which the ink viscosity is within a range of 8 to 15 mPa·s, and more preferably within a range of 8 to 13 mPa·s.

To improve ink ejection performance of a sol-gel phase-transition ink from the inkjet head, it is preferable that the ink temperature when the ink is filled in the inkjet head is within the range of (the gelation temperature + 10) °C to (the gelation temperature + 30) °C. When the ink temperature in the inkjet head is less than (gelation temperature + 10) °C, the ink is likely to gel in the inkjet head or on the nozzle surface, thereby tending to reduce ink ejection performance. On the other hand, when the ink temperature in the inkjet head exceeds (gelation temperature + 30) °C, the ink becomes excessively hot, and ink components may deteriorate.

The method of heating the ink is not particularly limited. For example, at least one of an ink supply system (e.g., an ink tank constituting a head carriage or a front-chamber ink tank immediately upstream of a supply pipe and a head), filter-equipped piping, and a piezoelectric head can be heated by a panel heater, a ribbon heater, or warm water.

The ink droplet amount being ejected is preferably in a range of 2 to 20 pL in view of recording speed and image quality.

The substrate is not particularly limited. Examples thereof include copper-clad laminates of any grade (e.g., FR-4), such as copper-clad laminates for high-frequency circuits using paper phenolic, paper epoxy, glass cloth epoxy, glass polyimide, glass cloth/nonwoven epoxy, glass cloth/paper epoxy, synthetic fiber epoxy, fluororesin, polyethylene, PPO, or cyanate ester; polyimide films; PET films; glass substrates; ceramic substrates; wafer plates; stainless steel plates (SUS); brass; and aluminum substrates. In particular, a copper-clad laminate or an aluminum substrate are preferred.

Examples of the conductive oxide film include copper, gold, silver, aluminum, nickel, and ITO.

### <Step (2)>

In step (2), the ink deposited on the oxide film in step (1) is irradiated with active energy rays so that the ink cures and forms an etching resist film.

The active energy rays may be selected from, for example, an electron beam, ultraviolet light, alpha rays, gamma rays, and X-rays, but is preferably ultraviolet light.

The irradiation with ultraviolet light can be performed using, for example, a water-cooled LED manufactured by Phoseon Technology, Inc. at a wavelength of 395 nm. By using an LED as the light source, it is possible to suppress insufficient curing of ink caused by the ink melting due to radiant heat from the light source.

The ultraviolet light irradiation is performed such that the peak irradiance of ultraviolet light having a wavelength within a range of 360 to 410 nm at the surface of the resist film is preferably within a range of 0.5 to 10 W/cm², more preferably within a range of 1 to 5 W/cm². To suppress irradiation of ink with radiant heat, it is preferable that the light amount applied to the resist film is 350 mJ/cm² or greater and less than 3000 mJ/cm².

The irradiation with active energy rays can be performed within 0.001 to 60 seconds after the ink lands. The irradiation with active energy rays is preferably performed within 0.001 to 1.0 seconds after the ink lands, and more preferably within 0.001 to 0.5 seconds in order to form a high-definition resist film.

The irradiation with active energy rays may be performed in two stages.

First, the ink may be provisionally cured by irradiation with active energy rays within 0.001 to 2.0 seconds after the ink lands. After all printing is completed, the ink may be fully cured by further irradiation with active energy rays. With the two stages of irradiation with active energy rays, shrinkage of recording material is less likely to occur during ink curing.

Thus, an etching resist film is formed by the inkjet method.

After formation of the etching resist film, the etching process is performed to form a resist pattern, such as a circuit, a pattern, characters, or an image on the substrate.

### (Etching Process)

In the etching process, first, the oxide film 2 not covered with the etching resist film 3 is removed using an acid etching solution (see FIG. 3). Further, by stripping the etching resist film 3 covering the oxide film 2 with an alkaline stripping solution (alkaline solution), fine and highly accurate line drawings such as circuits, patterns, characters, and images can be obtained (see FIG. 4).

In the reaction mechanism of wet etching using a liquid, etching is performed by scraping the substrate with corrosion. For example, when a metal substrate is used, etching is performed by forcibly corroding the metal through oxidative dissolution of the metal.

In the present disclosure, the term "etching resistance" means that when a substrate on which a cured film (etching resist film) has been formed is immersed in an etching solution, the cured film remains on the substrate without peeling off and withstands the etching solution. The cured film formed of the ink of the present disclosure has excellent etching resistance because it does not peel off when brought into contact with an etching solution.

Examples of the etching solution include an aqueous ferric chloride solution, an aqueous cupric chloride solution, an aqueous ammoniacal copper solution, a high-concentration aqueous sodium hydroxide solution, high-concentration hydrochloric acid, an aqueous hydrofluoric acid solution, and an aqueous ferric nitrate solution.

The etching solutions exemplified above may be used alone or in combination of two or more thereof. The etching process can be performed, for example, at 40 to 60 °C.

For example, an aqueous ferric chloride solution is preferably used mainly for etching copper. When copper is immersed in the aqueous ferric chloride solution, the copper dissolves into the solution, and a displacement reaction proceeds in which copper replaces iron to produce copper chloride, whereby etching of the copper substrate proceeds.

Examples of the alkaline stripping solution (alkaline solution) include an aqueous sodium hydroxide solution, an aqueous potassium hydroxide solution, an aqueous tetramethylammonium hydroxide solution, an aqueous sodium (meta)silicate solution, and an aqueous silicate solution (silicate-containing aqueous solution).

The ink of the present disclosure can also be used to form a plating resist.

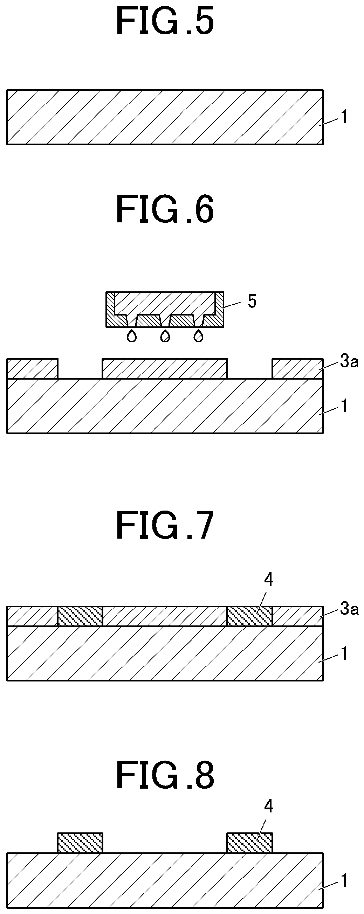

FIG. 5 to FIG. 8 show diagrams illustrating the manufacturing process of the printed circuit board when the ink of the present disclosure is used to form the plating resist.

In the manner similar to the formation of the etching resist described above, ink droplets are ejected from the inkjet head 5 onto the substrate 1 as a recording medium (see FIG. 5). The droplets land at positions corresponding to the plating resist film 3a to be formed. Thus, patterning is performed (see FIG. 6).

Next, the ink having landed is irradiated with active energy rays so that the ink cures and forms a plating resist film 3a.

After the plating resist film 3a is formed, as shown in FIG. 7, a plating layer 4 is formed on the substrate 1 by performing the following plating process.

### (Plating process)

The plating process may be performed using any of acidic bath, neutral bath, and alkaline bath for electrolytic plating or electroless plating. As the plating process, electroless plating using an acidic bath is preferable. By the plating process, a plating layer is formed on the metal layer portions exposed on the surface of the substrate (i.e., portions other than the plating resist film).

The plating layer is formed of a metal such as gold, silver, platinum, rhodium, palladium, copper, or nickel, for example, but is not limited thereto.

The plating process steps preferably includes a nickel plating step and/or a gold plating step. The nickel plating step is preferable for protecting copper, and is also preferable in that it can be suitably formed in a soldering step. The gold plating step is preferable from the viewpoint of long-term stability of the nickel plating layer.

Specifically, the plating process steps preferably include a degreasing step using a weak alkaline solution, an acid cleaning step, a palladium activation step, a nickel plating step, and a gold plating step, for example.

Because the plating process steps include immersion in an acidic solution and high-temperature immersion at about 60 to 90 °C, for example, a plating layer having both acid resistance and heat resistance is formed as the cured film. Thus, plating durability is improved.

After forming the plating layer 4, as shown in FIG. 8, portions of the plating resist film 3a other than the plating layer 4 are stripped by using an organic solvent or an aqueous stripping solution containing an organic solvent (a solvent-containing aqueous stripping solution).

Usable organic solvents include not only organic solvents that are readily soluble in water but also organic solvents that are sparingly soluble or insoluble in water.

Specific examples of organic solvents include: linear, branched, secondary, or polyhydric alcohols such as ethanol, propanol, 2-propanol, butanol, 2-butanol, hexanol, ethylene glycol, diethylene glycol, triethylene glycol, propylene glycol, dipropylene glycol, butylene glycol, trimethylolpropane, neopentyl glycol, glycerin, 1,2,4-butanetriol, 1,2-butanediol, 1,4-butanediol, and diacetone alcohol; ethylene glycol alkyl ethers such as ethylene glycol monomethyl ether, ethylene glycol monoethyl ether, and ethylene glycol monobutyl ether; polyethylene glycol alkyl ethers such as diethylene glycol monomethyl ether, diethylene glycol monoethyl ether, and triethylene glycol monomethyl ether; propylene glycol alkyl ethers such as propylene glycol monomethyl ether; polypropylene glycol alkyl ethers such as dipropylene glycol monomethyl ether; acetate esters such as ethylene glycol monomethyl ether acetate, diethylene glycol monomethyl ether acetate, propylene glycol monomethyl ether acetate, dipropylene glycol monomethyl ether acetate, glycerin monoacetate, and glycerin diacetate; lactic acid esters such as ethyl lactate and butyl lactate; adipic acid esters such as diethyl adipate and dibutyl adipate; phthalic esters such as diethyl phthalate and dibutyl phthalate; dialkyl glycol ethers such as diethylene glycol diethyl ether; ketones such as methyl ethyl ketone, cyclohexanone, and isophorone; aromatic hydrocarbons such as toluene and xylene; aromatic alcohols such as benzyl alcohol; petroleum-based aromatic mixed solvents such as the SWASOL series (manufactured by Maruzen Petrochemical Co., Ltd.) and the SOLVESSO series (manufactured by Exxon Chemical Company); n-hexane, cyclohexane, tetrahydrofuran, 1-methyl-2-pyrrolidone (N-methyl-2-pyrrolidone), methyl ethyl ketone, 2-pyrrolidone, γ-butyrolactone, N,N-dimethylformamide, 1,3-dimethyl-2-imidazolidinone, dimethyl sulfoxide, or dimethylacetamide. These organic solvents may be used alone or in combination of two or more thereof.

Among the above organic solvents, aromatic alcohols such as benzyl alcohol, 1-methyl-2-pyrrolidone (N-methyl-2-pyrrolidone), 2-pyrrolidone, γ-butyrolactone, N,N-dimethylformamide, 1,3-dimethyl-2-imidazolidinone, dimethyl sulfoxide, methyl ethyl ketone, and dimethylacetamide are preferred.

Preferred organic solvents include aromatic alcohols such as benzyl alcohol, 1-methyl-2-pyrrolidone, and 2-pyrrolidone.

Examples of commercially available products of a solvent-containing aqueous stripping solution include Anlast CB, Anlast 612-T, and Anlast No. 1D (manufactured by Sanwa Junyaku Kenkyusho Co., Ltd.), CLEANTHROUGH LC-841 and CLEANTHROUGH PA-900 (manufactured by Kao Corporation).

Removal of the etching resist film with an alkaline solution after the etching process, or removal of the plating resist film with a stripping solution containing an organic solvent after the plating process, can be performed by immersion, spraying, immersion while applying ultrasonic waves, or the like.

When peeling is performed by the immersion method, immersion may be carried out for 1 to 60 minutes in a peeling liquid at 40 to 60 °C, the peeling liquid being an alkaline solution or a stripping solution containing an organic solvent, for example. Such an operation may be performed only once, or the same operation may be performed multiple times. After the peeling step, the substrate may be washed with the alkaline solution, the organic solvent, or another solvent used in the peeling step.

### EXAMPLES

The present disclosure will be described in detail below with reference to examples. However, the present disclosure is not limited thereto. In the following examples, operations were performed at room temperature (25 °C) unless otherwise specified. Unless otherwise specified, "%" and "parts" mean "% by mass" and "parts by mass", respectively.

### [Materials of inkjet ink]

The following were used as materials of the inkjet ink.

### [Table 1]

**TABLE I**

| | Product Name | Company Name | Name |
|---|---|---|---|
| Acrylic acid | Acrylic acid | Toagosei Co., Ltd. | Acrylic acid |
| Acrylic acid Polymerizable compound (A) (n=1) | 2-Carboxyethyl acrylate | Sigma-Aldrich | 2-carboxyethyl acrylate |
| Acrylic acid Polymerizable compound (B) (n=2) | - | - | - |
| Acrylic acid Polymerizable compound (C) (n=3) | - | - | - |
| Monomer having acrylamide group | ACMO | KJ Chemicals | Acryloyl morpholine (monofunctional) |
| | DMAA | KJ Chemicals | N,N-dimethylacrylamide |
| Other monomers | SR551 | Sartomer | Methoxy polyethylene glycol (350) Monoacrylate |
| | ARONIX M-140 | Toagosei Co., Ltd. | N-acryloyloxyethylhexahydrophthalimide Imide (monofunctional) |
| Polymerization initiator | Omnirad907 | IGM Resins B.V. | 2-methyl-1-[4-(methylthio)phenyl]-2-morpholinopropan-1-one |
| | Omnirad819 | IGM Resins B.V. | Bis(2,4,6-trimethylbenzoyl)-phenylPhosphine oxide |
| | SpeedCure 2-ITX | Sartomer | 2-isopropylthioxanthone |
| Cycloaliphatic monomer | Miramer1130 | Miwon | Trimethylcyclohexyl acrylate (molecular weight: 196) |
| | Miramer1140 | Miwon | Isobornyl acrylate (molecular weight: 208) |
| | FA-512AS | Resonac | Dicyclopentenyloxyethyl acrylate (Molecular weight: 248) (monofunctional) |
| Polyfunctional monomer | Miramer M262 | Miwon | Tricyclodecane dimethanol diacrylate |
| | Miramer M222 | Miwon | Dipropylene glycol diacrylate |
| | A-DOG | Shin-Nakamura Chemical Industry | Dioxane glycol diacrylate (difunctional) |
| gelling agent | EXCEPARL SS | Kao | Stearyl stearate |
| | Kao Wax T1 | Kao | Distearyl ketone |
| Dye | Macrolex Blue 3R | LANXESS | 1,4-bis[(2-ethyl-6-methylphenyl)amino]-9, 10-anthracenedione |
| | Crystal Violet | Tokyo Chemical Industry Co., Ltd. | - |
| | Valifast Violet 1701 | Orient Chemical Industries Co., Ltd. | - |
| Polymerization inhibitor | Irgastab UV-10 | BASF | 4,4'-[1,10-dioxo-1,10-(decanediyl) bis(oxy)]bis[2,2,6,6-tetramethyl] -1-piperidinyloxy |

The structures of the compounds shown in Table I above are set forth below.

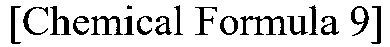

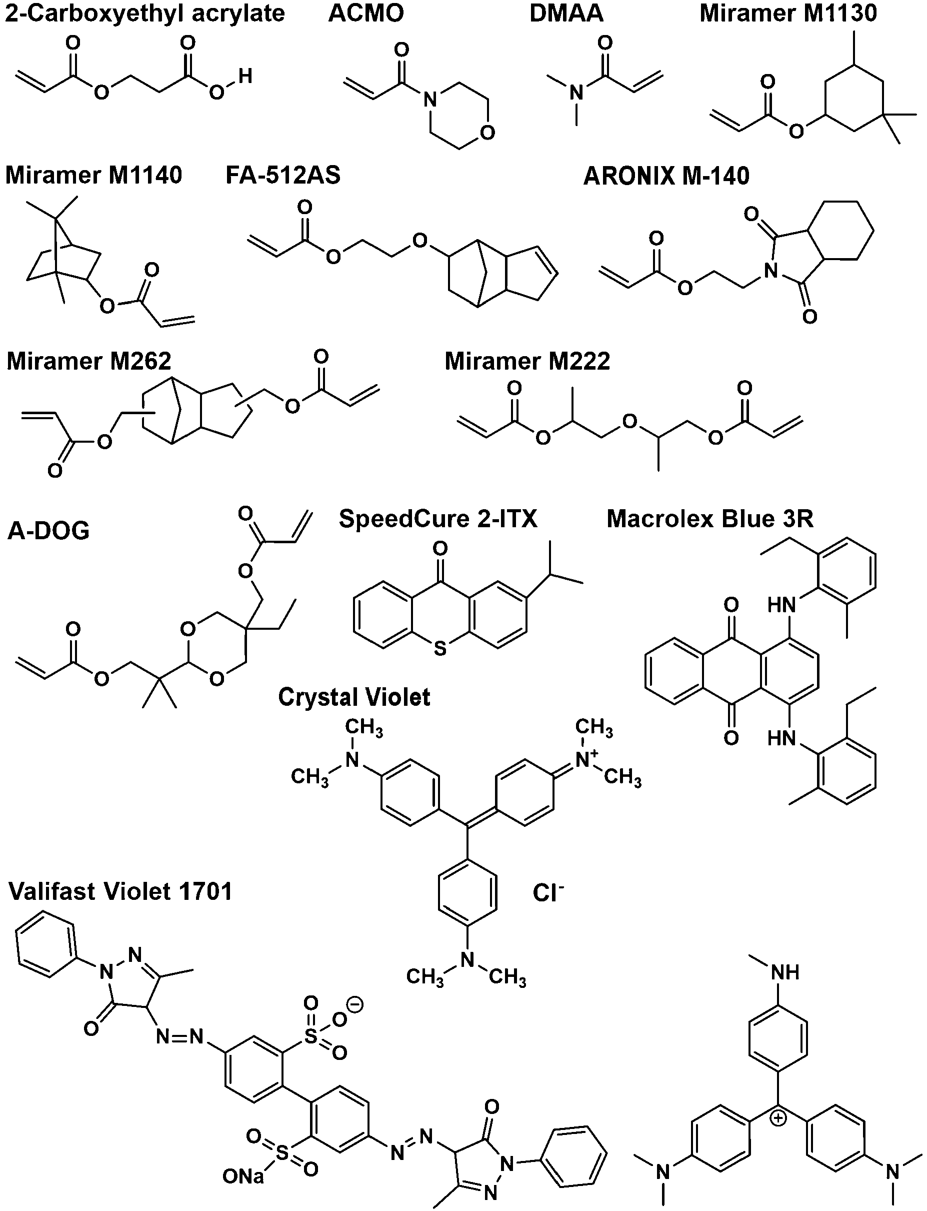

### <Preparation of acrylic acid polymerizable compound (B)>

The acrylic acid polymerizable compound (B) was prepared by isolating, by high-performance liquid chromatography (HPLC), the reaction product (D) obtained by the following reaction.

First, 100 g of 98% acrylic acid (manufactured by Toagosei Co., Ltd.), 20% Amberlyst A15 resin, and 1000 ppm of hydroquinone monomethyl ether as a polymerization inhibitor were added to a three-necked reactor equipped with a temperature probe and a reflux condenser. Subsequently, the reaction medium was stirred at 125 °C while bubbling air therethrough to obtain a reaction product (D).

The HPLC conditions were as follows.
Column: InertSustain C18 (5 µm, 150 × 4.6 mm I.D.)
40°
Eluent: (A) 0.1 M sodium phosphate buffer (pH 2.5), 95%; (B) acetonitrile, 5%
Gradient: 0 minute (B: 5%) - 5 minutes (B: 5%) - 15 minutes (B: 40%) - 20 minutes (B: 40%)
Flow rate: 1.0 mL/min
Detection: UV 210 nm
Sample concentration: approximately 1500 ppm
Under the above conditions, the peak at the elution time of about 13.5 minutes was collected to obtain the acrylic acid polymerizable compound (B).

### <Preparation of acrylic acid polymerizable compound (C)>

The acrylic acid polymerizable compound (C) was isolated from the reaction product (D) obtained in the above reaction by using HPLC.

The HPLC conditions were as follows.
Column: InertSustain C18 (5 µm, 150 × 4.6 mm I.D.)
40°
Eluent: (A) 0.1 M sodium phosphate buffer (pH 2.5), 95%; (B) acetonitrile, 5%
Gradient: 0 min (B: 5%) - 5 min (B: 5%) - 15 min (B: 40%) - 20 min (B: 40%)
Flow rate: 1.0 mL/min
Detection: UV 210 nm
Sample concentration: approximately 1500 ppm
Under the above conditions, the peak at the elution time of about 15 minutes was collected to obtain the acrylic acid polymerizable compound (C).

### [Preparation of ink]

Inks 1 to 25 were prepared by mixing components listed in the following Tables II to V and filtering the resulting mixtures through a 3 µm TEFLON (registered trademark) membrane filter (manufactured by DVANTEC Co.) while being heated at 80 °C.

### [Table 2]

| TABLE II | | | | | | | Units [wt%] | |
|---|---|---|---|---|---|---|---|---|
| | | Example | Example | Example | Example | Example | Example | Example |
| Ink No. | | 1 | 2 | 3 | 4 | 5 | 6 | 7 |
| Acrylic acid | | 10.0 | 10.0 | 10.0 | 10.0 | 10.0 | 10.0 | 10.0 |
| Acrylic acid-polymerizable compound (A) | | 10.0 | 10.0 | 10.0 | 10.0 | 10.0 | 10.0 | 10.0 |
| Acrylic acid-polymerizable compound (B) | | 5.0 | 5.0 | 5.0 | 5.0 | 5.0 | 5.0 | 5.0 |
| Acrylic acid-polymerizable compound (C) | | 0.0 | 1.0 | 1.0 | 1.0 | 1.0 | 1.0 | 1.0 |
| monomer having Acrylic amide group | ACMO | - | - | 10.0 | - | 10.0 | - | - |
| | DMAA | - | - | - | 10.0 | - | - | - |
| Others Monomer | SR551 | 39.5 | 38.5 | 28.5 | 28.5 | 28.5 | 8.5 | 28.5 |
| | ARONIX M-140 | 30.0 | 30.0 | 30.0 | 30.0 | 30.0 | 30.0 | 30.0 |
| Polymerization initiator | Omnirad907 | 3.0 | 3.0 | 3.0 | 3.0 | - | - | - |
| | Omnirad819 | - | - | - | - | 3.0 | 3.0 | 3.0 |
| | SpeedCure 2-ITX | 2.0 | 2.0 | 2.0 | 2.0 | 2.0 | 2.0 | 2.0 |
| Cycloaliphatic monomer | Miramer 1130 | - | - | - | - | - | - | - |
| | Miramer 1140 | - | - | - | - | - | - | - |
| | FA-512AS | - | - | - | - | - | - | - |
| Polyfunctional monomer | Miramer M262 | - | - | - | - | - | - | - |
| | Miramer M222 | - | - | - | - | - | - | - |
| | A-DOG | - | - | - | - | - | 30.0 | 10.0 |
| Gelling agent | EXCEPARL SS | - | - | - | - | - | - | - |
| | Kao Wax T1 | - | - | - | - | - | - | - |
| Dye | MacrolexBlue3R | 0.50 | 0.50 | 0.50 | 0.50 | 0.50 | 0.50 | 0.50 |
| | Crystal Violet | - | - | - | - | - | - | - |
| | Valifast Violet 1701 | - | - | - | - | - | - | - |
| Total | | 100.0 | 100.0 | 100.0 | 100.0 | 100.0 | 100.0 | 100.0 |

### [Table 3]

| TABLE III | | | | | | Units [wt%] | |
|---|---|---|---|---|---|---|---|
| | | Example | Example | Example | Example | Example | Example |
| Ink No. | | 8 | 9 | 10 | 11 | 12 | 13 |
| Acrylic acid | | 10.0 | 10.0 | 10.0 | 10.0 | 10.0 | 10.0 |
| Acrylic acid-polymerizable compound (A) | | 10.0 | 10.0 | 10.0 | 10.0 | 10.0 | 10.0 |
| Acrylic acid-polymerizable compound (B) | | 5.0 | 5.0 | 5.0 | 5.0 | 5.0 | 5.0 |
| Acrylic acid-polymerizable compound (C) | | 1.0 | 1.0 | 1.0 | 1.0 | 1.0 | 1.0 |
| Monomer having Acrylic amide group | ACMO | - | 15.0 | 15.0 | 15.0 | 15.0 | 15.0 |
| | DMAA | - | - | - | - | - | - |
| Others Monomer | SR551 | 0.0 | 0.0 | 0.0 | 0.0 | 0.0 | 0.0 |
| | ARONIX M-140 | 28.5 | 43.5 | 43.5 | 23.5 | 28.5 | 28.5 |
| Polymerization initiator | Omnirad907 | - | - | - | - | - | - |
| | Omnirad819 | 3.0 | 3.0 | 3.0 | 3.0 | 3.0 | 3.0 |
| | SpeedCure 2-ITX | 2.0 | 2.0 | 2.0 | 2.0 | 2.0 | 2.0 |
| Cycloaliphatic monomer | Miramer1130 | - | - | - | 20.0 | - | - |
| | Miramer1140 | - | - | - | - | 20.0 | - |
| | FA-512AS | - | - | - | - | - | 20 |
| Polyfunctional monomer | Miramer M262 | - | 10.0 | - | - | - | - |
| | Miramer M222 | - | - | 10.0 | - | - | - |
| | A-DOG | 40.0 | - | - | 10.0 | 5.0 | 5.0 |
| Gelling agent | EXCEPARL SS | - | - | - | - | - | - |
| | Kao Wax T1 | - | - | - | - | - | - |
| Dye | MacrolexBlue3R | 0.50 | 0.50 | 0.50 | 0.50 | 0.50 | 0.50 |
| | Crystal Violet | - | - | - | - | - | - |
| | Valifast Violet 1701 | - | - | - | - | - | - |
| Total | | 100.0 | 100.0 | 100.0 | 100.0 | 100.0 | 100.0 |

### [Table 4]

| Table IV | | | | | | Units [wt%] | |
|---|---|---|---|---|---|---|---|
| | | Example | Example | Example | Example | Example | Example |
| Ink No. | | 14 | 15 | 16 | 17 | 18 | 19 |
| Acrylic acid | | 15.0 | 10.0 | 10.0 | 25.0 | 10.0 | 10.0 |
| Acrylic acid-polymerizable compound (A) | | 10.0 | 5.0 | 5.0 | 5.0 | 5.0 | 5.0 |
| Acrylic acid-polymerizable compound (B) | | 5.0 | 5.0 | 2.0 | 2.0 | 1.0 | 2.0 |
| Acrylic acid-polymerizable compound (C) | | 1.0 | 1.0 | 1.0 | 1.0 | 1.0 | 1.0 |
| Monomer having Acrylic amide group | ACMO | 15.0 | 15.0 | 15.0 | 15.0 | 15.0 | 15.0 |
| | DMAA | - | - | - | - | - | - |
| Others Monomer | SR551 | 0.0 | 0.0 | 0.0 | 0.0 | 0.0 | 0.0 |
| | ARONIX M-140 | 23.5 | 33.5 | 36.5 | 21.5 | 37.5 | 36.5 |
| Polymerization initiator | Omnirad907 | - | - | - | - | - | - |
| | Omnirad819 | 3.0 | 3.0 | 3.0 | 3.0 | 3.0 | 3.0 |
| | SpeedCure 2-ITX | 2.0 | 2.0 | 2.0 | 2.0 | 2.0 | 2.0 |
| Cycloaliphatic monomer | Miramer1130 | - | - | - | - | - | - |
| | Miramer1140 | - | - | - | - | - | - |
| | FA-512AS | 20.0 | 20.0 | 20.0 | 20.0 | 20.0 | 20.0 |
| Polyfunctional monomer | Miramer M262 | - | - | - | - | - | - |
| | Miramer M222 | - | - | - | - | - | - |
| | A-DOG | 5.0 | 5.0 | 5.0 | 5.0 | 5.0 | 5.0 |
| Gelling agent | EXCEPARL SS | - | - | - | - | - | - |
| | Kao Wax T1 | - | - | - | - | - | - |
| Dye | MacrolexBlue3R | 0.50 | 0.50 | 0.50 | 0.50 | - | - |
| | Crystal Violet | - | - | - | - | - | - |
| | Valifast Violet 1701 | - | - | - | - | 0.50 | 0.50 |
| Total | | 100.0 | 100.0 | 100.0 | 100.0 | 100.0 | 100.0 |

### [Table 5]

| Table V | | | | | | | Units [wt%] |
|---|---|---|---|---|---|---|---|
| | | Example | Example | Example | Example | Comparative Example | Comparative Example |
| Ink No. | | 20 | 21 | 22 | 23 | 24 | 25 |
| Acrylic acid | | 10.0 | 10.0 | 10.0 | 6.0 | 10.0 | 10.0 |
| Acrylic acid-polymerizable compound (A) | | 5.0 | 5.0 | 5.0 | 3.0 | 0.0 | 5.0 |
| Acrylic acid-polymerizable compound (B) | | 2.0 | 2.0 | 2.0 | 2.0 | 0.0 | 0.0 |
| Acrylic acid-polymerizable compound (C) | | 0.5 | 0.5 | 0.5 | 0.5 | - | - |
| Monomer having Acrylic amide group | ACMO | 15.0 | 15.0 | 15.0 | 15.0 | - | - |
| | DMAA | - | - | - | - | - | - |
| Others Monomer | SR551 | 0.0 | 0.0 | 0.0 | 0.0 | 54.5 | 49.5 |
| | ARONIX M-140 | 37.0 | 37.0 | 35.4 | 41.4 | 30.0 | 30.0 |
| Polymerization initiator | Omnirad907 | - | - | - | - | - | - |
| | Omnirad819 | 3.0 | 3.0 | 3.0 | 3.0 | 3.0 | 3.0 |
| | SpeedCure 2-ITX | 2.0 | 2.0 | 2.0 | 2.0 | 2.0 | 2.0 |
| Cycloaliphatic monomer | Miramer1130 | - | - | - | - | - | - |
| | Miramer1140 | - | - | - | - | - | - |
| | FA-512AS | 20.0 | 20.0 | 20.0 | 20.0 | - | - |
| Polyfunctional monomer | Miramer M262 | - | - | - | - | - | - |
| | Miramer M222 | - | - | - | - | - | - |
| | A-DOG | 5.0 | 5.0 | 5.0 | 5.0 | - | - |
| Gelling agent | EXCEPARL SS | - | - | 0.8 | 0.8 | - | - |
| | Kao Wax T1 | - | - | 0.8 | 0.8 | - | - |
| Dye | MacrolexBlue3R | - | - | - | - | 0.50 | 0.50 |
| | Crystal Violet | - | 0.50 | - | - | - | - |
| | Valifast Violet 1701 | 0.50 | - | 0.50 | 0.50 | - | - |
| Total | | 100.0 | 100.0 | 100.0 | 100.0 | 100.0 | 100.0 |

### [Pattern Formation by Ink jetting]

The prepared inks were loaded into an inkjet recording apparatus including an inkjet recording head provided with piezoelectric inkjet nozzles. As the inkjet recording head, KM1800iSHC-C (manufactured by Konica Minolta, Inc.) was used. Using this apparatus, a pattern was formed on a copper-clad laminate for a printed wiring board (FR-4, thickness: 1.6 mm, dimensions: 150 mm × 95 mm).

The ink supply system includes an ink tank, an ink channel, a sub-ink tank immediately upstream of the inkjet recording head, piping with a metal filter, and a piezoelectric head. The ink was heated to 80 °C from the ink tank to the head. The ink in the inkjet head was heated to 80 °C by the inkjet head having a built-in heater.

With the inkjet recording apparatus, printing was performed so that a dot has the droplet amount of 6.0 pL, and a 20 mm × 50 mm solid pattern having the thickness of 20 µm was printed on the substrate. Thereafter, the ink layer was irradiated by Fire Jet (TM) FJ100 (manufactured by Phoseon Technology, Inc., wavelength: 395 nm) at 2 W/cm² and 3000 mJ/cm². Thus, the ink layer was cured to form a cured film.

### [Evaluation]

### <Dye elution into etching solution>

The samples of the cured film were immersed in an aqueous ferric chloride solution at 60 °C for 30 minutes, rinsed with water, and dried. Thereafter, a color-tone change of the cured film was visually observed to confirm whether the cured film became lighter in color than before being immersed in the chemical solution. Dye elution was evaluated according to the following criteria. Ratings A and B were regarded as acceptable in practical use.

### (Criteria)

A: No change in color tone.
B: The edge portion of the cured film became slightly lighter in color (the color faded).
C: The entire cured film becomes lighter in color (the color faded).
D: The cured film completely loses color and becomes colorless.

### <Dye elution in alkaline stripping solution>

The samples of the cured film were immersed in a 3% aqueous sodium hydroxide solution at 40 °C for 2 minutes. Thereafter, changes in color tone of the stripping solution and the stripped film were visually observed. Dye elution was evaluated according to the following criteria. Ratings A, B, and C were regarded as acceptable in practical use.

### (Criteria)

A: No change in color tone.
B: The stripping solution was colored, and a portion of the stripped cured film became slightly thinner (the color faded).
C: The stripping solution becomes darkly colored, and the entire stripped cured film became thinner (the color faded).
D: The stripped cured film was completely decolorized and became colorless.

### <Etching resistance>

The samples of the cured film were immersed in an aqueous ferric chloride solution at 60 °C for 30 minutes, washed with water, and dried. Thereafter, an adhesive tape was applied and peeled off, and the peeling state of the cured film was observed. The etching resistance was evaluated according to the following criteria. Ratings A, B, and C according to the following criteria were regarded as acceptable in practical use.

### (Criteria)

A: No peeling occurred.
B: No peeling occurred, but slight discoloration was observed.
C: An edge portion slightly peeled, but the most part of the cured film remained, and no peeling occurred.
D: Peeling occurred over the entire surface.

### <Alkali strippability>

The samples of the cured film after the etching resistance evaluation were immersed in a 3% aqueous sodium hydroxide solution at 40 °C, then washed with water and dried. Thereafter, the strippability of the cured film was visually observed. The alkali strippability was evaluated according to the following criteria. Ratings A, B, and C according to the following criteria were regarded as acceptable in practical use.

### (Criteria)

A: The cured film peeled off within 1 minute.
B: The cured film peeled off in more than 1 minute and in 2 minutes.
C: The cured film peeled off in more than 2 minutes and in 3 minutes.
D: The cured film did not peel off after immersion for 3 minutes or longer.

### <Decapability>

The decapability of ink refers to an ability of ink to maintain its fluidity when exposed to outside air. As quantitative measures of the decapability, there are (i) a decap time during which a nozzle surface of a recording head can be left uncapped until the nozzle surface becomes clogged or blocked, and (ii) a decrease rate of an ink ejection speed after the nozzle surface is left uncapped for a predetermined time with respect to an ink ejection speed when a cap of the nozzle surface is opened. In other words, the decapability serves as an index indicating whether the ink tends to dry easily.

Here, the decapability was evaluated based on a decrease rate of ink ejection speed after a predetermined time elapsed.

For evaluation of decapability, the respective inks were loaded into an inkjet recording apparatus including a piezoelectric head having 128 nozzles with a nozzle diameter of 20 µm, and a driving frequency of 10 kHz under the condition of 75 °C and 20% RH. At the ejection speed of 6 m/s at 0.5 mm from the nozzle surface , intermittent ejections were performed as follows: continuous ejection for 20 seconds, a pause for 5 seconds, and continuous ejection. The speed decrease rate of the initial ejection speed after the ejection pause was measured, and decapability was evaluated according to the criteria below. Ratings A and B according to the following criteria were regarded as acceptable in practical use.

### (Criteria)

A: The speed decrease rate was 5% or less.
B: The speed decrease rate was greater than 5% and not greater than 10%.
C: The speed decrease rate was greater than 10%.

### [Table 6]

**Table VI**

| | Ink No. | Dye elution property into etching solution | Dye elution propersty into alkaline stripping solution | Etching Resistance | Alkali Strippability | Decappability |
|---|---|---|---|---|---|---|
| Example | 1 | B | C | C | B | A |
| Example | 2 | B | B | C | B | A |
| Example | 3 | B | B | C | A | A |
| Example | 4 | B | B | C | A | A |
| Example | 5 | B | B | B | B | A |
| Example | 6 | B | B | A | B | A |
| Example | 7 | B | B | A | B | A |
| Example | 8 | B | B | A | C | A |
| Example | 9 | B | B | A | B | A |
| Example | 10 | B | B | A | B | A |
| Example | 11 | B | B | A | A | A |
| Example | 12 | B | B | A | A | A |
| Example | 13 | B | B | A | A | A |
| Example | 14 | B | B | B | A | A |
| Example | 15 | B | B | A | A | A |
| Example | 16 | B | B | A | A | A |
| Example | 17 | B | B | A | A | B |
| Example | 18 | A | B | A | A | A |
| Example | 19 | A | B | A | A | A |
| Example | 20 | A | B | A | A | A |
| Example | 21 | B | B | B | A | A |
| Example | 22 | A | A | A | A | A |
| Example | 23 | A | A | A | A | A |
| Comparative Example | 24 | D | D | D | D | A |
| Comparative Example | 25 | C | D | C | D | A |

As shown in the above results, it is confirmed that the ink of the present example can prevent dye elution and exhibits better etching resistance and alkali strippability than the ink of the comparative examples.

In addition, it is confirmed that when the acrylic acid content is 15% or less, the decrease rate of the ink ejection speed after an elapse of predetermined time is small and therefore decapability is favorable.

Although embodiments of the present invention have been described and illustrated in detail, the disclosed embodiments are provided for purposes of illustration and example only, and not by way of limitation. The scope of the present invention should be interpreted in accordance with the terms of the appended claims.

## Claims

1. An active energy ray curable inkjet ink containing:
a dye having an amino group,
acrylic acid,
an acrylic acid polymerizable compound (A) shown by a following general formula (1) in which "n" is 1, and
an acrylic acid polymerizable compound (B) shown by the general formula (1) in which "n" is 2.

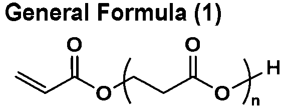

2. The active energy ray curable inkjet ink according to claim 1, further containing an acrylic acid polymerizable compound (C) shown by the general formula (1) in which "n" is 3, wherein a content of the acrylic acid polymerizable compound (C) is 0.1% by mass or greater.

3. The active energy ray curable inkjet ink according to claim 1, further containing a monomer having an acrylamide group.

4. The active energy ray curable inkjet ink according to claim 1, further containing a polymerization initiator having an acylphosphine structure as a photopolymerization initiator.

5. The active energy ray curable inkjet ink according to claim 1, further containing a polyfunctional monomer, wherein a content of the polyfunctional monomer is 30% by mass or less.

6. The active energy ray curable inkjet ink according to claim 1, further containing a polymerizable monomer having an alicyclic structure.

7. The active energy ray curable inkjet ink according to claim 1, wherein a content of the acrylic acid is 15% by mass or less.

8. The active energy ray curable inkjet ink according to claim 1, wherein the dye is a salt of a compound having a triarylmethane structure, and a counter anion has a molecular weight of 100 or greater.

9. The active energy ray curable inkjet ink according to claim 1, further containing a gelling agent.

10. The active energy ray curable inkjet ink according to claim 1, wherein the ink is used for an etching resist.

11. The active energy ray curable inkjet ink according to claim 1, wherein the ink is used for a plating resist.

12. An inkjet recording method comprising:
ejecting the active energy ray curable inkjet ink according to any one of claims 1 to 11 onto a substrate,
and
curing the ink with active energy rays.
